# EUROPEAN PATENT APPLICATION

(11) **EP 4 461 954 A1**
(43) Date of publication of application: **13.11.2024**
(21) Application number: 23173132.4
(22) Date of filing: 12.05.2023
(51) Int. Cl.: F03D 80/00, F03D 7/04, F03D 17/00, F03D 7/02, G05B 17/02, G06F 30/33, G06F 30/20, G06F 111/06, G06F 111/08

(54) **METHOD OF INSTALLING AND CONTROLLING AN OFFSHORE WIND POWER PLANT**

(71) Applicant: Ørsted Wind Power A/S, 7000 Fredericia (DK)
(72) Inventor: KOCEWIAK, Lukasz, 7000 Fredericia Skaerbaek (DK); BAKHSHIZADEH DOWLATABADI, Mohammadkazem, 7000 Fredericia Skaerbaek (DK)
(74) Representative: Lewis Silkin LLP

(57) **Abstract**

Method of installing the offshore wind power plant, in which a number of installation design variants are modelled to determine performance characteristics. Modelling comprises applying a Monte Carlo method. An installation design is then selected based on the variant with the highest performance characteristics. The offshore wind power plant may be controlled by determining its instability probability characteristics based on modelling using a plurality of known installation design parameters and one or more variable control parameters associated with the wind power plant, wherein modelling comprises applying a Monte Carlo method. The one or more variable control parameters may then be controlled such that the wind power plant is operated below a selected instability probability threshold.

## Description

The present application concerns a method of installing an offshore wind power plant. As well as a method of controlling an offshore wind power plant (WPP). The present application is particularly relevant to control and installation methods for maintaining grid stability, and methods of improving reliability and optimizing offshore wind power plant operations.

Offshore WPPs are hugely expensive and complex systems. During installation, design choices are made, and component parameters can vary between installations, which ultimately can have a significant bearing on the reliability and operational stability of the wind power plant during use. For example, cables in the collection grid, transformers at the offshore substation, long HVAC transmission cables, onshore transformers and other components create various resonance scenarios in the system. This poses a significant challenge in terms of developing a stable system as the interaction of resonance characteristics. In addition, manufacturing tolerances of equipment, and particularly cabling, can also impact ultimate performance. As such, installation decisions and operating control methodologies have to try to account for both the inherent complexity of the system, as well as the performance variances arising from differences between real-world installations.

In view of the above, improved modelling of a WPP, which is able to account for variables such as component tolerances, cable burial depths, temperature, and loading, is an important area of research to provide for more cost effective and efficient installation and control methods in wind power plant systems. For example, conventional techniques will often use impedance-based stability analysis and apply a worst-case approach to set operating parameters. However, this leads to conservative installation and operating approaches, which limit output of the system and can become prohibitively expensive. That is, typically a larger stability margin will be adopted in order to avoid a loss of grid stability.

In view of the above there is a need for an improved method of installing and controlling the operation of an offshore wind power plant which better balances the risk of grid instability against system performance.

According to a first aspect of the present invention, there is provided a method of installing the offshore wind power plant, comprising: (a) modelling a number of installation design variants to determine performance characteristics, wherein modelling comprises applying a Monte Carlo method; (b) selecting an installation design based on the variant with the highest performance characteristics.

In this way, variables can be modelled by simulating how the model responds to randomly generated inputs. That is, by using the Monte Carlo technique, a large number of random simulations can be used to replicate this variance and provide for determination of how probable it is for the system to become unstable. Accordingly, a grid stability model is generated based on a plurality of parameters associated with each wind power plant system design using the installation design parameters specific to that design variant. Simulations may then be run using the computerized model of the wind power plant system for a plurality of scenarios where random values are assigned to the random input variables. As such, the risk of each design variable can be characterised in order to select the optimum variant. For example, the cheapest design variant which achieves a required operating stability may be selected.

In embodiments, the installation design variants include one or more of the following design variables: component selections, component combinations, component characteristics, cable burial depths, cable gauges, material selections, configuration options, transformer characteristics, filter characteristics, and operating condition characteristics.

In embodiments, the step of selecting an installation design comprises selecting a variant with the highest performance score based on one or more performance characteristics.

In embodiments, the calculated highest performance score includes weighting the one or more performance characteristics. In embodiments, the one or more performance characteristics include cost characteristics. In embodiments, the cost characteristics include installation costs and costs resulting from power outages.

In embodiments, the step of modelling a number of installation design variants comprises performing a plurality of simulations for each design variant.

In embodiments, the plurality of simulations comprises one or more random parameter selections.

In embodiments, the method further comprises the step of installing the offshore wind power plant according to the selected variant highest performance characteristics.

According to a second aspect, there is provided a method of controlling an offshore wind power plant, comprising: (a) determining instability probability characteristics for the offshore wind power plant based on modelling using a plurality of known installation design parameters and one or more variable control parameters associated with the wind power plant, wherein modelling comprises applying a Monte Carlo method; (b) setting an instability probability threshold; and (c) controlling the one or more variable control parameters associated with the wind power plant such that the wind power plant is operated below the instability probability threshold.

In this way, the Monte Carlo technique is used to determine how probable it is for the system to become unstable. As such, control parameters can be adjusted such that the required operating stability is maintained.

In embodiments, the step of determining instability probability characteristics comprises modelling a plurality of simulations using random parameter selections.

According to a third aspect, there is provided a non-transient computer readable medium comprising instructions which, when executed by a processor, perform the method according to the above.

According to a fourth aspect, there is provided a computer software product comprising instructions which, when executed by a processor, perform the method according to any of the above.

An illustrative embodiment of the present invention will now be described with reference to the accompanying drawings in which:
Figure 1 shows an output from a Monte Carlo simulation for the selection of a wind turbine power plant variant;
Figure 2 shows a histogram of the Monte Carlo simulation showing probability mapped against distance to instability; and
Figure 3 shows a schematic illustration of cost plotted against reliability for selecting an optimised performance in an illustrative example.

Embodiments of the present invention are based on using Monte Carlo simulations to model the stability of the wind power plant. In one aspect, the wind power plant may then be controlled based on control thresholds determined using the simulations. In another aspect, a new wind power plant may be installed based on design decisions determined using the output of the simulations.

In this respect, the Monte Carlo simulations, according to an embodiment of the invention, allow variables to be modelled by simulating how the model responds to randomly generated inputs. That is, it is typically difficult to derive the probability distribution function analytically for a complicated system. By using the Monte Carlo technique, a large number of random simulations can be used to replicate this variance and provide for determination of how probable it is for the system to become unstable.

In particular, a grid stability model is generated based on a plurality of parameters associated with the wind power plant system. These parameters may include known installation design parameters, such as component performance and resonance characteristics, as well as one or more variable control parameters. Of the installation design parameters, those that are known to have a variance, for example associated with component tolerances, a plurality of random input variables is added to the model to account for that uncertainty. Simulations are then run using the computerized model of the wind power plant system for a plurality of scenarios where random values are assigned to the random input variables. Where present, scenarios are also run for the variable control parameters to determine how the stability response varies with adjustment of these parameters.

The outputs of the simulations are then aggregated, and the aggregated results are assessed to evaluate the probability distribution of the stability indices. This provides for an assessment of the risk of the system being unstable.

As mentioned above, in one aspect, the wind power plant may be controlled based on a control threshold determined using the simulations. In this respect, in one embodiment, the method comprises first determining instability probability characteristics for the offshore wind power plant based on the above modelling for the plurality of parameters associated with the wind power plant. An instability probability threshold is then set and mapped to the simulation results to determine the maximum control parameters which may be used, whilst still maintaining operations below the set instability probability. For example, a probability of instability may be set to a predetermined maximum threshold.

Once the threshold has been set, the one or more variable control parameters may be controlled such that the wind power plant is operated below the instability probability threshold.

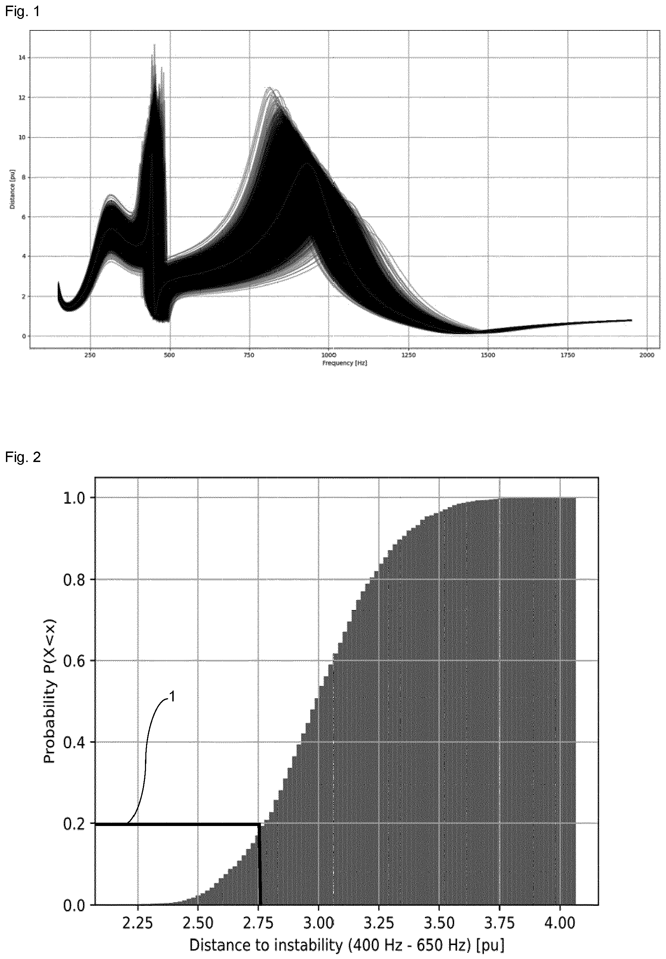

As mentioned above, in another aspect, a new wind power plant may be installed based on design decisions determined using the output of the simulations. In this respect, in one embodiment, the method comprises modelling a number of installation design variants to determine performance characteristics using the Monte Carlo method. Each design variant may include differences, for example, in terms of the components chosen, as well as design choices such as cable burial depths and the arrangement of operating units. Figure 1 shows an illustrative example output from a Monte Carlo simulation for a particular wind power plant variant and Figure 2 shows a histogram of the Monte Carlo simulation showing probability mapped against distance to instability.

The performance characteristics for each model can then be compared to determine the optimum variant and the wind power plant may then be installed according to the selected variant. For example, a threshold probability of instability 1 may be set as a required minimum. The optimum variant may be selected as the design variant which has the highest distance to instability relative to cost.

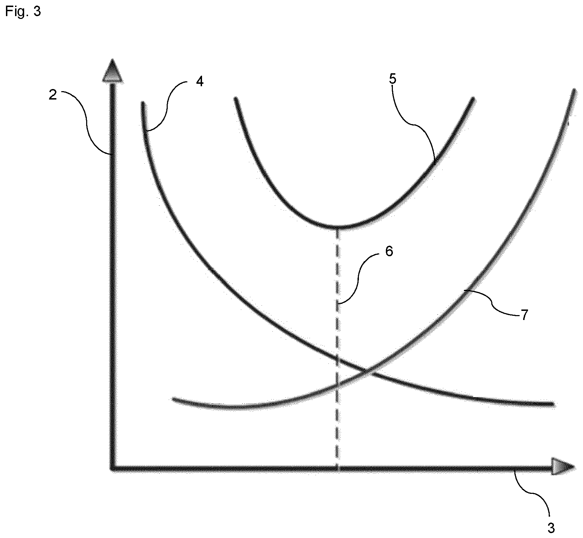

In this connection, Figure 3 shows a schematic illustration of cost 2 plotted against reliability 3 for selecting an optimised performance in an illustrative example. Line 4 shows the cost of a power loss outage and line 7 shows the system installation cost. Line 5 shows the total cost change, which indicates that a highest performance is where the total cost is minimised by balancing the cost of a power loss outage against the installation costs. In practice, it will be understood that the selection of an optimised performance reliability level may be achieved by weighting installation costs and instability factors in a calculation algorithm to identify an optimal design variant.

It will be understood that the embodiments illustrated above show applications of the invention only for the purposes of illustration. In practice the invention may be applied to many different configurations, the detailed embodiments being straightforward for those skilled in the art to implement.

## Claims

1. A method of installing an offshore wind power plant, comprising:
(a) modelling a number of installation design variants to determine performance characteristics, wherein modelling comprises applying a Monte Carlo method;
(b) selecting an installation design based on the variant with the highest performance characteristics.

2. A method according to claim 1, wherein the installation design variants include one or more of the following design variables:
component selections, component combinations, component characteristics, cable burial depths, cable gauges, material selections, configuration options, transformer characteristics, filter characteristics, and operating condition characteristics.

3. A method according to claim 1 or 2, wherein the step of selecting an installation design comprises selecting a variant with the highest performance score based on one or more performance characteristics.

4. A method according to claim 3, wherein the calculated highest performance score includes weighting the one or more performance characteristics.

5. A method according to any preceding claim, wherein the step of modelling a number of installation design variants comprises performing a plurality of simulations for each design variant.

6. A method according to claim 5, wherein the plurality of simulations comprises one or more random parameter selections.

7. A method according to any preceding claim, further comprising the step of installing the offshore wind power plant according to the selected variant highest performance characteristics.

8. A method of controlling an offshore wind power plant, comprising:
(a) determining instability probability characteristics for the offshore wind power plant based on modelling using a plurality of known installation design parameters and one or more variable control parameters associated with the wind power plant, wherein modelling comprises applying a Monte Carlo method;
(b) setting an instability probability threshold; and
(c) controlling the one or more variable control parameters associated with the wind power plant such that the wind power plant is operated below the instability probability threshold.

9. A method according to claim 8, wherein the step of determining instability probability characteristics comprises modelling a plurality of simulations using random parameter selections.

10. A non-transient computer readable medium comprising instructions which, when executed by a processor, perform the method according to any preceding claim.

11. A computer software product comprising instructions which, when executed by a processor, perform the method according to any of claim 1 to 9.
